# EUROPEAN PATENT APPLICATION

(11) **EP 3 798 952 A1**
(43) Date of publication of application: **31.03.2021**
(21) Application number: 20197613.1
(22) Date of filing: 22.09.2020
(51) Int. Cl.: G06Q 10/06

(54) **RISK-BASED REGULATORY PROCESS MONITORING AND CONTROL**

(30) Priority: 30.09.2019 US 201916588104
(71) Applicant: Honeywell International Inc., Charlotte, NC 28202 (US)
(72) Inventor: ONTEDDU, Sivanarayana, Charlotte, NC 28202 (US); WINKLER, Torsten, Charlotte, NC 28202 (US); RAMANUJAM, Priya, Charlotte, NC 28202 (US); BANDEKAR, Rajendra, Charlotte, NC 28202 (US); KEMPF, Alicia C., Charlotte, NC 28202 (US)
(74) Representative: Dennemeyer & Associates S.A.

(57) **Abstract**

Automated real-time risk-based regulatory process monitoring and controls are integrated to automation control systems. This allows for a flexible production process that allows continuous process verification. Data integrity is improved by evaluating the effectiveness of existing controls and by continually testing process accuracy and validity.

## Description

Manufacturing processes in life science industries including pharmaceutical, biological and medical devices are regulated by the Current Good Manufacturing Practices (CGMP) regulations that are enforced by the US Food and Drug Administration (FDA). CGMP ensures that products of the highest quality are consistently manufactured. In order to encourage process improvement and, at the same time the manufacture high-quality products, regulatory authorities have introduced a risk-based approach for process monitoring and control development.

In the modern life science industry, plants operate under an integrated business and production system, using ISA S95 and ISA S88 standards for models and terminology, and implementing flexible recipe-based production. ISA S95 is an international standard for developing an automated interface between enterprise and control systems. ISA S88 is an international standard for batch process control.

Given the multitude and variety of data being generated by various systems with the development of supporting technologies such as the increasing use of electronic data capture, automation and use of remote technologies, current manufacturing processes are facing operational and strategic challenges to ensure in an effective way that underlying regulatory data is trustworthy to ensure that data integrity regulatory compliance requirements are met.

Modern pharmaceutical manufacturing environments have varied systems and processes which make the best use of available technologies to manage GMP (good automation manufacturing practice) activities to ensure that products of the highest quality are consistently manufactured. GMP activities include collecting, analyzing, maintaining, and validating manufacturing data characterized by the necessity to maintain high productivity and flexibility, while at the same time complying with strict regulations imposed by different government agencies specifically those from the US Food and Drug Administration (FDA) such as the US Code of Federal Regulations Title 21, parts 11, 210, and 211, the EudraLex Annex 11, and the International Council for Harmonization of Technical Requirements for Pharmaceuticals for Human Use (ICH).

In a typical connected regulated pharmaceutical manufacturing environment, the amount of data being generated and collected for regulatory compliance continues to grow which includes the data from process operations, production data sets such as batch records, and data generated from devices to operational systems (such as assets, units, and equipment).

Given the multitude and variety of data being generated, current manufacturing processes facing operational and strategic challenges to ensure in an effective way that the underlying data is trustworthy to the extent data is complete, consistent, and accurate, leading to an incorrect conclusion about the capability and quality of the product.

In addition, the cost and effort required to analyze and validate the data for regulatory compliance and process improvements can become unmanageable where the customized processes become more complex to consider all relevant process operations data in analysis, leading to inadequate reviews and improper decisions which further delays to manufacture and release of a product until all documents had been reviewed.

At the same time, regulatory authorities across the world are noticing a significant increase in data integrity issues and proper controls around that data continue to be questioned. Accordingly, regulatory agencies are significantly increasing data integrity compliance requirements for quality risk management and safe production for pharmaceutical products. These requirements are meant to help manufacturers in the regulated environment to establish and maintain systems and GMP activities to support regulatory authorities to ensure the quality of products and availability of medicines around the world in the interest of public health.

Recognizing the need for maximizing the production efficiency coupled with regulatory compliance, manufacturers in the regulated pharmaceutical manufacturing sector are looking for risk-based CGMPs that consistently manufacture high-quality products and have significant benefits to both the business in reducing operational costs and help establish flexible production processes without extensive regulatory oversight.

### SUMMARY OF THE INVENTION

In the current disclosure, a method for practical implementation of risk-based process monitoring and control strategy in embedded controller environment is proposed, based on process and production specific change information relating to CGMP regulatory compliance requirements that enable process improvement and, at the same time, ensure high regulatory compliance in the flexible manufacturing environment.

### BRIEF DESCRIPTION OF DRAWINGS

Figure 1 is a flow chart showing ISA 95 and S88 integration through manufacturing operations and control and through control levels.
Figure 2 shows the steps of a current control strategy based on ISA S88 models on process equipment.
Figure 3 shows a block diagram of an automation control system with a risk-based regulatory monitor.
Figure 4 shows the relationship between input and output parameters.
Figure 5 shows a method of scope of risk-based regulatory monitoring and control for exceptions.
Figure 6 shows an automation control system with risk -based regulatory monitor and control.

### DETAILED DESCRIPTION OF THE INVENTION

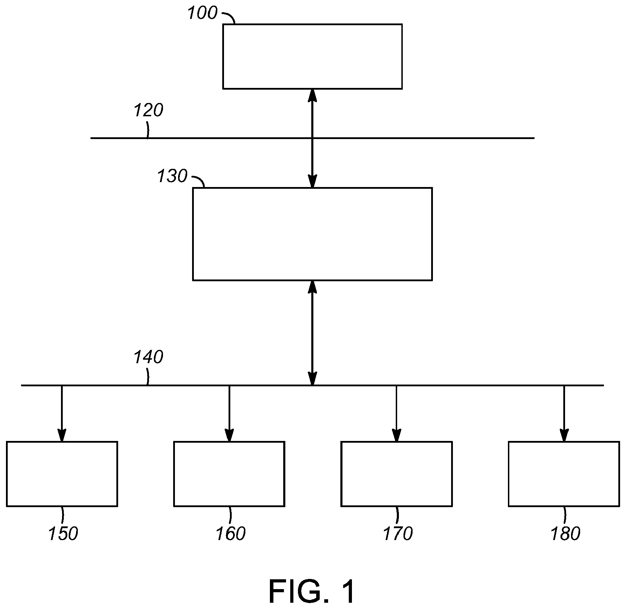

Current automation control system strategies in a regulated process manufacturing environment such as pharmaceutical development are organized in accordance with integrated ISA S88 and ISA 95 standards, which have the general structure as shown in FIG. 1. At the enterprise level 120 is business planning 100 which communicates with the manufacturing operations and control (MES) 130. At the batch control level 140 are found controls for batch process control 150, equipment control 160, continuous process control 170 and discrete process control 180.

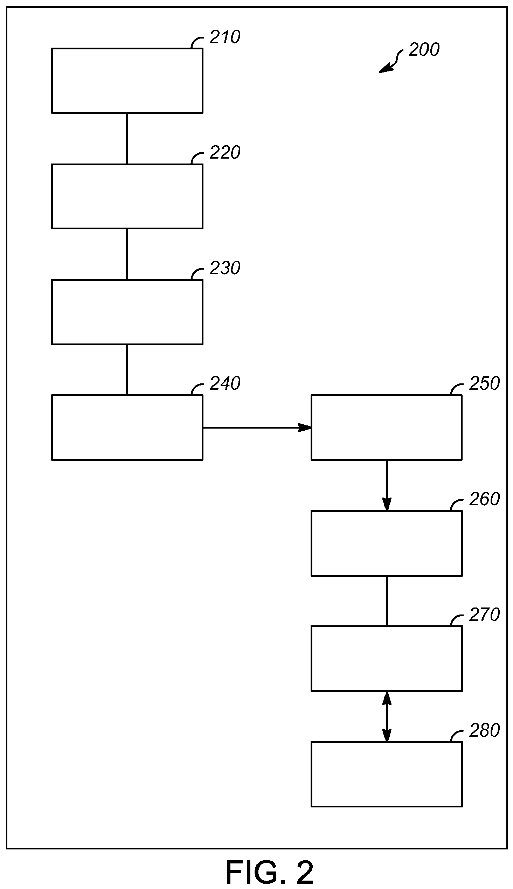

ISA 95 standards are used for developing the manufacturing execution system (MES) level and business planning and logistics. ISA S88 standard models including the procedure control model, physical model, and process model are used to define production recipes which uniquely specifies the ingredients, and sequence of steps necessary to produce a certain product. Practical implementation of S88 model-based control strategies 200, after mapping on process equipment, is usually done as shown in FIG. 2 with the processes and equipment which shows procedure 210, unit procedure 220 communicating with operation 230 and phase 240, equipment phase 250, control module 260, input/output modules 270 communicating with the process 280.

S88 model-based current control strategies are principally focused on the Quality Target Product Profile (QTPP) to ensure critical quality attributes (CQA) as defined in ICH and FDA regulatory guidelines appropriate for the intended marketed product. Quality Target Product Profile (QTPP) is defined as a prospective summary of the quality characteristics of a drug product that ideally will be achieved to ensure the desired quality, considering safety and efficacy. The QTPP provides an understanding of what will ensure the quality, safety, and efficacy of a specific product for the patient. The Quality Target Product Profile (QTPP) describes the design criteria for the product, and should, therefore, form the basis for the development of the CQAs, CPPs, and control strategy. Critical Quality Attributes (CQA) are defined as a physical, chemical, biological, or microbiological property or characteristic that should be within an appropriate limit, range, or distribution to ensure the desired product quality. The CPP is a critical process parameter.

However, current control strategies do not enable information relating to the product-specific changes relating to GMP, equipment, and material attributes to mitigate process variability that requires a regulatory submission if changed. The effect of these process inputs (e.g., process parameters, material attributes) and outputs (that may include in-process controls) that are necessary to assure product quality are often not addressed in the current control strategies. Furthermore, the effect of unknown process parameters and material attributes are sufficiently not addressed, and it is often difficult to foresee such variations for a product which is already in development.

For successful operation and process improvements, control strategies should include critical process parameters (CPPs), as well as key process parameters (KPPs), which are parameters of the manufacturing process that may not be directly linked to product critical quality attributes (CQAs) but need to be tightly controlled to assure process consistency as it relates to product quality. A Critical Process Parameter (CPP) is defined as a process parameter whose variability has an impact on a CQA and therefore should be monitored or controlled to ensure the process produces the desired quality. A Key Process Parameter (KPP) is defined as a parameter of the manufacturing process that may not be directly linked to critical product quality attributes but need to be tightly controlled to assure process consistency as it relates to product quality.

In a pharmaceutical development environment where most of the product manufacturing operations are automated, there may be no paper-based "audit trail." Furthermore, implementation of fully connected manufacturing environments may expose the operation to increased risks of waste, fraud, and abuse if control strategies fail to be effective. It is imperative, therefore, to redefine the current control strategy implementation to a holistic product lifecycle strategy to enable process improvement and, at the same time, ensure high regulatory compliance in the flexible pharmaceutical production.

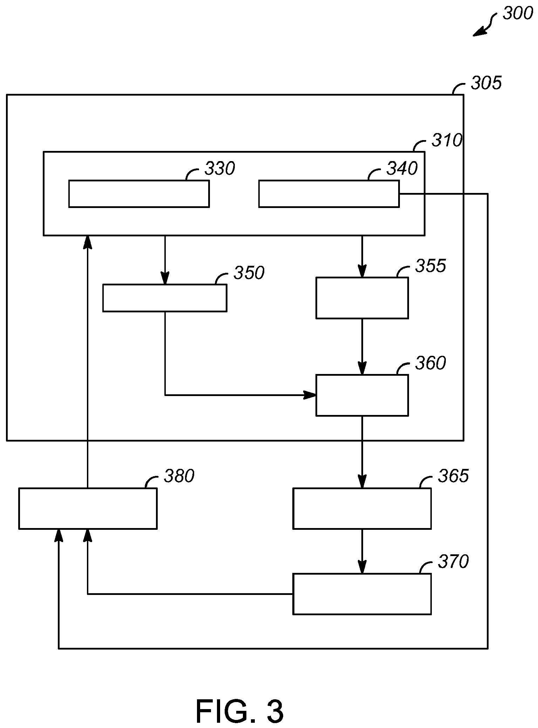

FIG. 3 is a block diagram of a proposed risk-based regulatory monitor and control system solution 300 supported in embedded controller 310 integrated to the automation control system 305. The unshaded blocks represent the use of generalized audit software or audit tools 355 within a current automation control system 305. The shaded areas show the new risk-based regulatory monitoring 330 and control solution 340 added to the control system. A real time embedded controller contains batch control execution data with a risk based regulatory monitor 330 that communicates information to regulatory exception report 350 which then communicates to data reports 360. A risk based regulatory control 340 communicates with procedure analyst/audit tools 355 which also communicates with data reports 360 which then communicates with corrective action and preventive action (CAPA) system 365 and change management system which then communicates with process performance and product quality review 370. Both risk-based regulatory control 340 and process performance and product quality review 370 then provide information to the user initiated corrective action 380 which then communicates with risk based regulatory monitor 330.

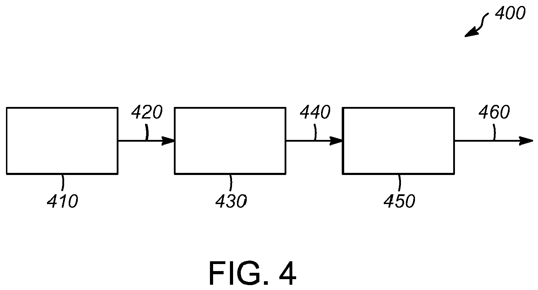

The disclosure of the present invention described here provides a central repository to define and monitor the risk-based critical process parameters (CPPs), key process parameters (KPPs), other process parameters for GMP and data integrity (ALCOA and ALCOA+) compliance and validation, and control system performance specifications, as key elements of product and design. These process parameters may not be linked directly to critical quality attributes (CQAs) defined in ICH Q10 and ICH Q12 and FDA guidelines, but need to be tightly controlled to assure process consistency as it relates to product quality and safety as shown in FIG. 4, and report that the data that requires a regulatory submission, if changed. In Fig. 4 is shown the entire process 400 with how the formulation and process 410 use the CPPS and KPPS together with the input materials 420 to produce a product 430. The CQA's define the use of the output materials 440 with the patient 450. The result 460 of the use of the product in the patient safety and efficacy of the product as well as the clinical outcome can then be measured.

In this disclosure, embedded controllers integrated to an automation control system will continuously monitor the defined critical process parameters in real time during control execution, for changes or out out-of-specification conditions that deviate from the established process conditions based on the good automated manufacturing practice (GAMP) specification and verification model (V diagram) and ICH and FDA regulatory guidelines that are necessary to assure product quality and patient safety.

In the proposed solution, as part of the implementation process, the user will choose the critical manufacturing process parameters (e.g., process, equipment, input materials) according to the FDA, ICH regulatory guidelines which have potential to have an impact on product quality, by applying a risk-based approach based on business process descriptions, process maps, process data maps reflecting production experience, and best practices.

Once the critical manufacturing process parameters are identified based on risk assessment, the user configures the parameters of I/O modules and procedure and equipment control strategies using an automation control system engineering configuration tool and it is loaded to the embedded controller to continuously monitor the relevant critical process parameters measured by the I/O modules and procedure control parameters.

The engineering tool in the proposed solution enables one to define the reporting category for each manufacturing process parameter as defined in ICH Q12 guidelines based on an assessment of criticality, either to get prior-approval to implement the process parameter changes or to notify regulatory authorities as a formal notification report before or after implementation. The automation control system engineering tool user interface allows authorized personnel to change these criteria with relative ease to review the criteria periodically and make required changes.

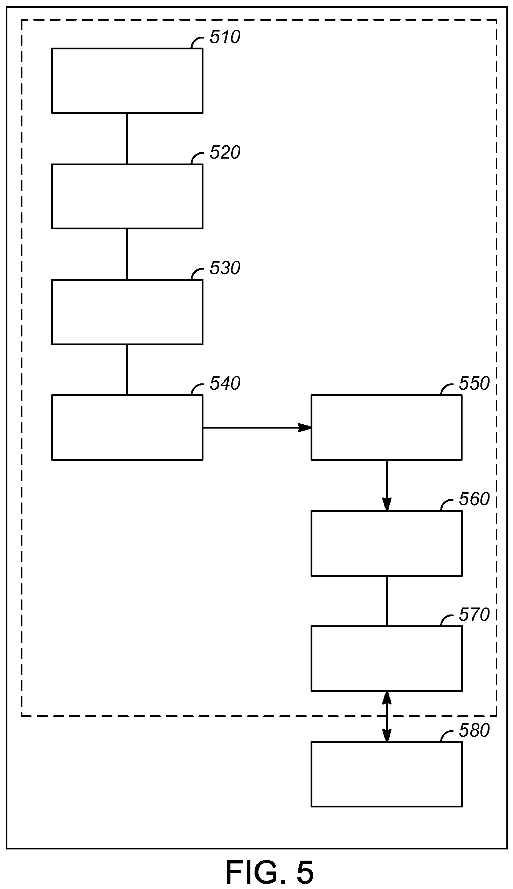

The proposed solution will extend the existing control strategy architecture to enable the critical process parameters in all components of automation control system strategies based on Risk-based regulatory requirements as shown in FIG. 5. Furthermore, the proposed solution enables to build the control strategies using the critical process parameters that allow establishing the relationship between critical process parameters that allow understanding the effect of other unknown process parameters on product quality.

Fig. 5 shows a risk-based regulatory monitor scope that shows the different procedures and equipment that combine in a risk-based regulatory monitor scope including procedure 510, unit procedure 520, operation 530, phase 540, equipment phase 550, control module 560, input/output modules 570 all of which are communicating with process 580.

These critical process parameters defined in the procedures and equipment monitored real-time continuously provide real-time feedback throughout the process to ensure that manufacturing operations are conducted within set specifications and product quality is maintained throughout their execution duration. As part of the control strategy execution, the controller will use the defined criteria to continuously monitor the critical parameters and identify the parameters that do not meet pre-defined criteria and report the situation of possible non-compliance. Based on the pre-defined categorization of each manufacturing process parameter, the controller will either suspend the data for further processing for pre-approval categories or allow a user with authority to approve or reject the data for further system processing

Also, the process and system as described herein enables one to automatically record user activity, key transactions, and exception conditions that change or deviate against the established process conditions based on the ICH and FDA guidelines in the regulatory exception report to ensure a thorough and accurate audit trail. All exception type process and operator data can be collected periodically and stored in an enterprise server database for report generation. The regulatory report includes the details of all critical process parameters, user changes and process deviations against the established process conditions based on the ICH and FDA guidelines that are necessary to manage the risks to assure product quality and patient safety. The regulatory exception reports can be collected for a specific batch or controller or for the entire enterprise server.

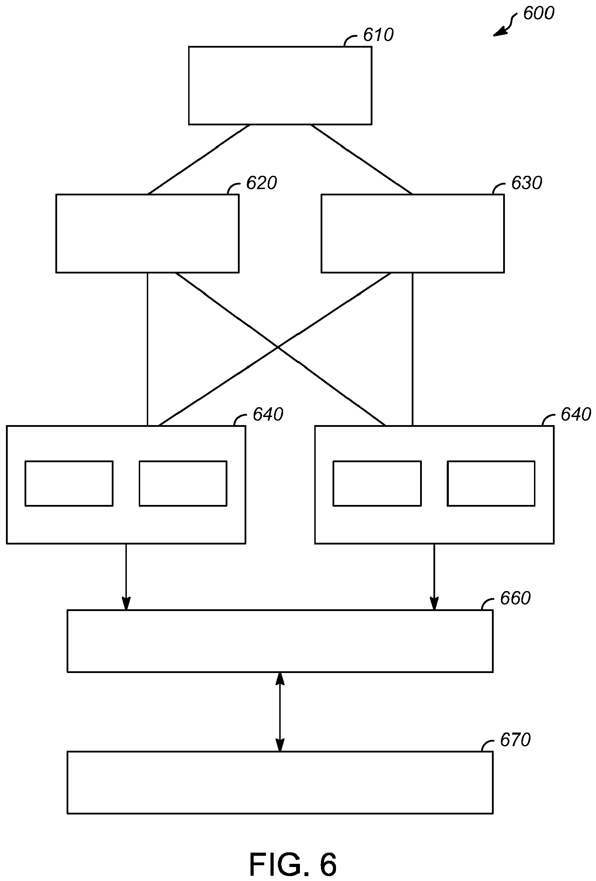

Fig. 6 shows the interrelationships of the automation control system with the risk-based regulatory monitor and control. In addition, FIG. 6 describes the block diagram 600 of the overall solution for integration of risk-based monitor and control solution to automation control system. The system includes human machine interface 610 such as one or more computer monitors that are used to monitor the automation control system and the process in operation. Risk-based regulatory report generation system 620 communicates with human machine interface 610 and with two process controllers 640 that are each shown as containing control strategies 650. Risk-based regulatory monitor and control configuration system 630 also communicates with process controllers 640. Process controllers 640 are shown as communicating with various I/O modules and devices 660 which then are positioned to communicate with process 670. As described above, this allows for the recordation of all user activity, key transactions and any exception conditions that involve changes or deviations against the established process conditions based on the appropriate regulatory guidelines.

The invention provides a number of advantages in meeting an ongoing need. By enabling the automated real-time risk-based regulatory process monitoring and control integrated to automation control system, manufacturers can establish and manage critical parameters conditions defined based on ICH and FDA regulatory requirements, Manufacturers are helped by being able to establish a flexible production process including continuous process verification and ongoing process verification as defined in Pharma 4.0. It allows process improvements and optimizations that reduce the end-product release testing and post-approval submissions, with real-time process quality control. Manufacturers can improve data integrity by evaluating the effectiveness of existing controls and by continually testing process accuracy and validity. Manufacturers can quickly find and correct problems as they occur rather than waiting until auditors tell where problems exist. The process and system allows manufacturers to have a better understanding of material attributes, manufacturing processes, and their controls. Although it is not always possible to detect and correct errors before the data are entered in the system as intended, risk-based regulatory process monitoring can be a good next line of defense against the erroneous data using regulatory exception report. This system and process encourages auditors and regulators to utilize the system generated risk-based regulatory reports to notify and request approval from the regulatory authority. It permits a reviewer to readily identify exceptional conditions and identify problem areas early enough for effective preventive action. In addition, it allows product quality reviews and inspections based on the risk-based regulatory decisions.

## Claims

1. A method for offline/online performance monitoring of a manufacturing process to produce a product, comprising the steps of:
a. providing a quality target product profile for said product;
b. identifying a set of critical quality attributes for said product;
c. obtaining process data for said manufacturing process on a continuous basis while said product is being manufactured;
d. monitoring said process data by a risk based regulatory monitor;
e. comparing said process data to said critical quality attributes to produce a report listing variations in said critical process parameters from predetermined values;
f. taking corrective action to correct said variations or reporting said variations without taking said corrective actions.

2. The method of claim 1 wherein said report is generated by a risk-based regulatory report generation system.

3. The method of claim 1 wherein a risk-based regulatory monitor and control system communicates to a process controller to send changes of said manufacturing process to take said corrective actions.

4. The method of claim 1 further comprising communicating said corrective action to an operator monitoring said process.

5. The method of claim 1 further comprising monitoring key process parameters.

6. The method of claim 1 wherein said method comprises developing control strategies relating said critical process parameters to a set of risk-based regulatory requirements for said product.

7. The method of claim 6 further comprising analyzing said process data and identifying additional previously unknown process parameters and said parameters impact upon product quality.

8. A system for manufacturing a product on a continuous or a batch basis, said system comprising;
a. providing a risk-based regulatory report generation system to continuously analyze manufacturing data produced during a manufacturing process, and compare said manufacturing data to a set of critical quality attributes for said product and to produce a report of said analysis; and
b. providing a risk-based regulatory monitor to both monitor and control said manufacturing process to either implement process parameter changes to said manufacturing process when said manufacturing data is determined to differ from at least one parameter within said set of critical quality attributes and said changes are within a predetermined range or report said changes.

9. The system of claim 8 wherein said changes are in a report of user initiated corrective actions.

10. The system of claim 8 wherein based upon a control strategy a controller will either suspend data for further processing in pre-approval categories or allow a user to approve or reject data for further system processing.
